# EUROPEAN PATENT SPECIFICATION

(11) **EP 3 040 218 B1**
(45) Date of publication and mention of the grant of the patent: **09.05.2018**
(21) Application number: 15203015.1
(22) Date of filing: 29.12.2015
(51) Int. Cl.: B60C 99/00, H05B 3/36

(54) **TYRE WARMER**
REIFENWÄRMER
COUVERTURE CHAUFFANTE POUR PNEUS

(30) Priority: 31.12.2014 IT PD20140369
(43) Date of publication of application: 06.07.2016
(73) Proprietor: BE-BRAND S.R.L., 36050 Bolzano Vicentino (VI) (IT)
(72) Inventor: BATTISTON, Massimo, I-35015 Galliera Veneta (PD) (IT)
(74) Representative: Gallo, Luca

(56) References cited:
- WO-A1-2009/004585
- DE-U1- 8 907 608

## Description

### Field of application

The present invention regards a tyre warmer for motorbike or car tyre, in particular for motorbike or car racing competitions, according to the preamble of the main independent claim.

The present tyre warmer is inserted in the field of manufacturing products for the field of motorbike and car racing.

More in detail, the tyre warmer according to the invention is intended to be employed in the sport of motorbike or car racing for warming the tyres, i.e. in particular for arranging the tyres in the optimal temperature and pressure conditions in order to allow the driver to enter onto the track in the conditions such that he can quickly attain his best performances.

### State of the art

As is known, the tyre warmers of the type that is the object of the present invention are widely employed in order to bring the tyres of the racing motorbikes or cars into the best temperature and pressure conditions, i.e. for allowing the best performances from the start of their use, minimizing the time and the road required on the track in order to allow the driver to reach optimal performances.

It is well known that tyre warmers are for example usually employed for preparing tyres before the start of the competition or in any case before entering onto the track, i.e. when the driver is stopped in the pit stalls for adjustments, set-up modifications, or to prepare the tyres to be replaced in case of pit-stop during the competitions.

Tyre warmers are known which comprise a flexible elongated body susceptible of being wound around the tyre and retention means capable of retaining the elongated body in the provided extended position around the tyre.

More in detail, the elongated body usually comprises a flexible structure made of electrically non-conductive fabric and a resistor element, it too mechanically flexible, associated with the fabric structure and variously distributed along the fabric structure in order to warm the tread of the tyre in a substantially uniform manner.

The resistor can for example be obtained with conductor material fibres of suitable resistance, inserted in the fibres of the textile structure, as is described in the patent EP 505936, or with a conductor circuit of suitable resistance, e.g. in turn mounted on a flexible support.

Advantageously, recently, in order to improve tyre warming performances, tyre warmers have been employed that were provided with warming material fibres made of carbon, as described for example in the patent DE 8907608 and showing the features of the preamble of claim 1. In addition, tyre warmer profiles have been designed that are particularly adherent to the tread, and control systems have been designed employing diagnostic means for inspecting the temperature and the pressure of the tyre and for ensuring the warming thereof and the attainment of the optimal conditions for the motorbike or car for entering the roadway, as is for example described in the patent EP 2173576. Notwithstanding the use of increasingly involved control systems, it often happens that the driver must in any case travel a good stretch of road and lose a lot of time before the tyres reach the optimal temperature and pressure conditions.

Such drawback of the current tyre warmers arises from numerous factors, including the difficulties in supplying the tyre - mainly built of rubber and hence with thermally insulating materials - with a quantity of heat and a pressure such to allow the tyres, once the tyre warmers have been removed, to present and maintain temperature and pressure values comparable to those that are reached during normal use on the track.

Up to now, in fact, once the tyre warmers are removed, the tyres quickly modify their temperature and pressure conditions, such that the driver cannot have optimal performances from the start.

In addition, once the tyre warmers are removed, temperature gradients can be present in the thickness of the tyre, which negatively condition the performances as well as the duration of the tyre itself.

Therefore, the main drawbacks of the tyre warmers of known type consist of the difficulty of providing the driver with tyres that have optimal performances from the start of their use on the racetrack.

A further problem, quite widespread in the manufacturing of tyre warmers, lies in the need to combine the capacity of optimally preparing the tyres from the thermal and pressure standpoint with the ease and rapidity of mounting and removal on/from the wheel, operations which must be carried out repeatedly during a race day and that, during the racing competitions, must be carried out in the shortest possible time.

It is in fact often required to mount / dismount the tyre warmers even numerous times, for example during a test session, in order to allow the pilot to return and make adjustments and setting modifications for the fine-tuning of the vehicle.

The adherence of the tyre warmers to the tyres, for an optimal transfer of the heat, must provide for fixing means and a profile of the tyre warmers that are suitable for ensuring easy and quick mounting. For example, the use of ties, for transversely closing the tyre warmer around the tyre, may be incompatible with the need for a quick mounting and dismounting of the tyre warmer itself.

### Presentation of the invention

In this situation, the problem underlying the present invention is therefore that eliminating the problems of the abovementioned prior art, by providing a tyre warmer for motorbike or car tyre, in particular for motorbike or car racing competitions, which allows the tyres to have optimal performances in less time or less road travelled by the driver with respect to the tyre warmers of the prior art.

Another object of the present invention is to provide a tyre warmer for motorbike or car tyre, in particular for motorbike or car racing competitions, which allows combining the capacity of optimally preparing the tyres from the thermal and pressure standpoint with the ease and rapidity of mounting on and removal from the wheel.

Another object of the present invention is to provide a tyre warmer for motorbike or car tyre, in particular for motorbike or car racing competitions, which allows limiting the fall of temperature after the removal of the tyre warmer from the wheel.

Another object of the present invention is to provide a tyre warmer for motorbike or car tyre, in particular for motorbike or car racing competitions, which allows a uniform distribution of the temperature of the wheel, both before the removal of the tyre warmer and after the removal of the tyre warmer.

Another object of the present invention is to provide a tyre warmer for motorbike or car tyre, in particular for motorbike or car racing competitions, which allows the maintenance of the pressure of the gas contained by the tyre.

Another object of the present invention is to provide a tyre warmer for motorbike or car tyre, in particular for motorbike or car racing competitions that is structurally simple and easy to use, which can be produced with limited costs.

### Brief description of the drawings

The technical characteristics of the finding, according to the aforesaid objects, can be clearly seen in the contents of the below-reported claims, and the advantages thereof will be more evident in the following detailed description, made with reference to the enclosed drawings, which represent a merely exemplifying and non-limiting embodiment of the invention, in which:
- figure 1 shows, in a schematic and perspective view, a tyre warmer embodiment according to the present invention, in open, unfolded condition;
- figure 2 shows an enlarged detail of the tyre warmer of figure 1;
- figure 3 shows the tyre warmer of figure 1 mounted on a motorbike wheel;
- figure 4 shows the tyre warmer of figure 3 mounted on the wheel in a cross section view;

### Detailed description of a preferred embodiment

With reference to the set of drawings, reference number 1 overall indicates an embodiment of a tyre warmer for motorbike or car tyre, in particular for motorbike or car racing competitions, object of the present invention.

The tyre warmer 1, according to the invention, is adapted to be employed for maintaining or preparing the temperature and pressure conditions of the tyres of racing vehicles, such as motorbikes or cars, before such vehicles are driven onto the racetrack by the drivers. The tyre warmer 1 is therefore in particular intended for preparing the tyres before the start of the vehicle in a competition, as well as during the tests for the numerous stops in the pit stalls, in order to allow the driver to make set-up adjustments to the vehicle, and even for preparing new tyres to be mounted on the vehicle.

The present tyre warmer 1 is intended to be mounted on the wheels of a race car or racing motorbike. The aforesaid wheels 2 are of known type, provided with a rim 3 with two lateral surfaces 4 and with one internal surface 5 substantially aimed towards the axis Z of the wheel 2 and placed to connect between the lateral surfaces 4.

On the internal surface 5, means 50 are arranged for connecting to the hub 6 of the wheel 2, usually constituted by spokes.

The wheel 2 also comprises, in an entirely conventional manner, a tyre 7 which is mounted on the rim 3, e.g. by means of retention means 8 attained at the internal profile of the tyre 7 and, for example, comprising a lip of the tyre 7 reinforced with a metal cable and engaged in an annular seat of the rim 3.

The tyre 7 is also usually provided with a tread surface 7', intended to come into contact with the road, and with a shoulder surface 7", intended to connect the tread surface 7' to the rim 3.

The tyre warmer 1 comprises, in a *per se* known manner, a flexible elongated body 10, which is extended between two end edges 11A, 11B in a longitudinal main extension direction Y, and between two lateral edges 12A, 12B, in a transverse direction X substantially orthogonal to the longitudinal direction Y and defining the width of the tyre warmer 1.

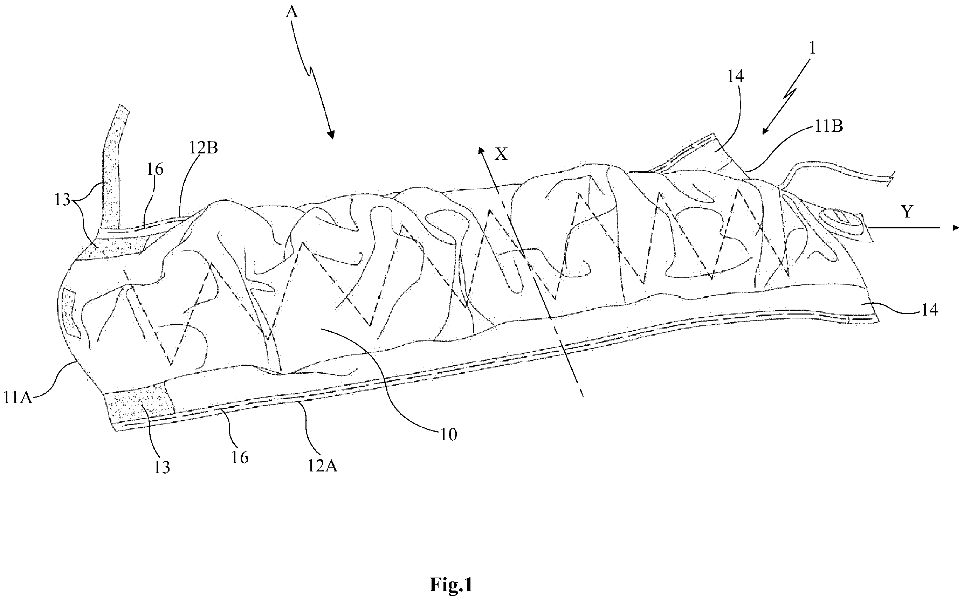

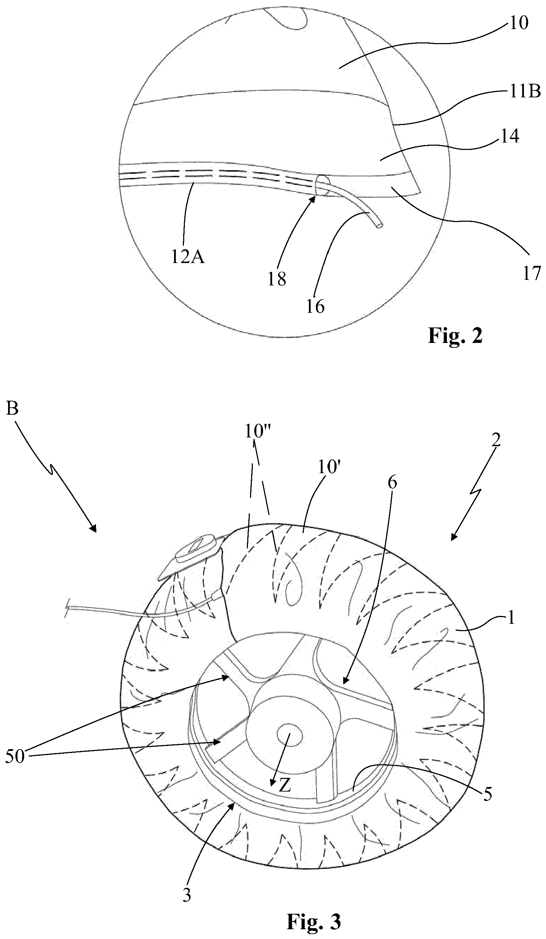

The flexible elongated body 10 can be manually wound and unwound with respect to a wheel 2 such that it can assume an open configuration A with the two end edges 11A, 11B separated from each other (as illustrated in figure 1), and a closed configuration B with the two end edges 11A, 11B coupled together (as illustrated in figure 3) by means of removable retention means 13 capable of retaining the elongated body in adherence around the tyre 7 and advantageously constituted by Velcro portions, which can be removably coupled and uncoupled to/from each other.

In accordance with the idea underlying the present invention, the elongated body 10 comprises, on one side thereof, at least one internal band 14 defined beginning from a corresponding lateral edge 12A, 12B. When the elongated body 10 is in closed configuration B with the end edges 11A, 11B coupled together, the internal band 14 can be oriented into an internally folded position C for covering a corresponding annular portion 15 of the internal surface 5 of the rim 3.

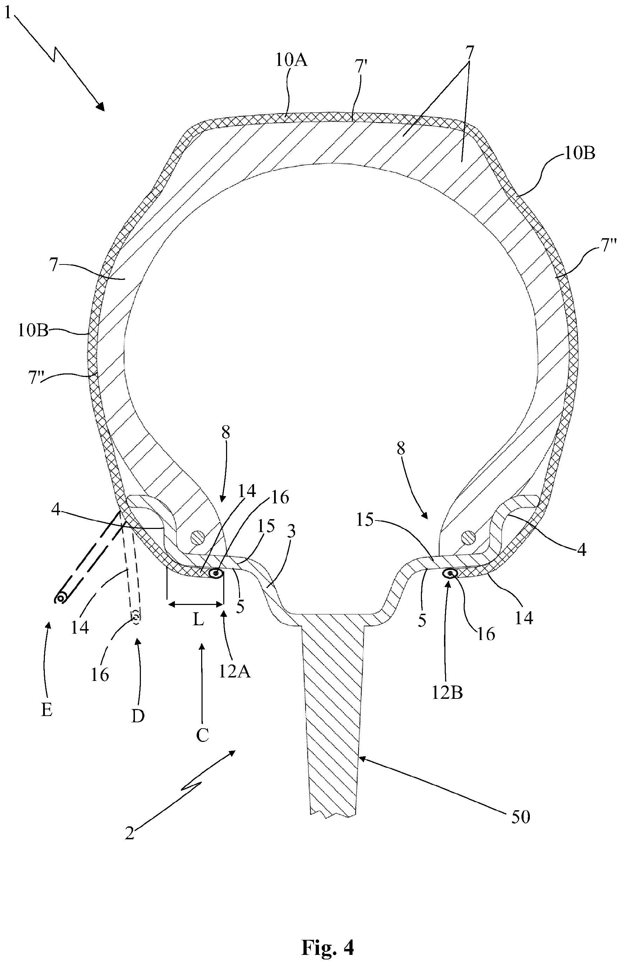

More clearly, with the expression "internal surface 5" it must be intended, as is clearly illustrated in figures 3 and 4, at least one portion of the rim 3 adjacent to the connection means 50 (in the form of spokes in figures 3 and 4) and substantially aimed towards the axis Z of the wheel 2.

Still more in detail and with reference to figure 4, such internal surface 5 is the area delimited between the lateral surfaces 4 of the rim 3 i.e. which is extended beginning from the lateral surfaces 4.

The lateral surfaces 4 have the function of covering, in axial direction, the circumferential edges of the tyre 7 in particular where the retention means 8 are present. The internal surface 5 continues the lateral surfaces 4 substantially in axial direction towards the connection means 50, in order to connect the latter to the lateral surfaces 4 of the rim 3 which are spaced in consideration of the width of the tyre 7.

The annular portion 15 of the internal surface 5 of the rim 3 is therefore an annular part of the internal surface 5 i.e. of the area that is extended between the lateral surfaces 4 of the rim 3. Such annular portion 15 can for example regard, as indicated in the enclosed figure 4, the two annular areas of width L which are extended beginning from the two lateral surfaces 4 towards the connection means 50; or such annular portion 15 can be extended up to the connection means 50.

Preferably, in accordance with the drawings of the enclosed figures, two internal bands 14 are provided on the two sides of the flexible elongated body 10. Such internal bands 14 are delimited by a lateral edge 12A, 12B, and they are transversely extended for a width L substantially equal to the corresponding annular portion 15 of the internal surface 5 of the rim 3 that they must come to cover (in figure 4, the internal bands 14 are extended e.g. for about 2/3 of the annular portion 15 of the internal surface 5 of the rim 3). Wheels 2 are known for race cars or racing motorbikes that are provided with rim 3 spokes which are quite shifted onto one side of the wheel, so as limit and sometimes make superfluous the coverage with the tyre warmer 1 of the annular portion 15 of the rim 3 on such side of the wheel 2; in this case, the tyre warmer 1 can be asymmetrically provided with a single internal band 14 on only one side.

The two internal bands 14 can have different width in order to cover annular portions 15 of the internal surface 5 of the rim 3 of corresponding different width.

The elongated body 10 is extended with a central portion 10A, susceptible of covering the tread 7' of the tyre 7, with two lateral portions 10B, adjacent to the central portion 10A, susceptible of covering the two shoulders 7" of the tyre and with the aforesaid at least one internal band 14, which is extended contiguously from at least one corresponding lateral portion 10B (and preferably from both of the lateral portions 10B) and is intended to cover the corresponding annular portion 15 of the internal surface 5 of the rim 3.

Due to the internal band 14, the tyre warmer 1 according to the invention will increase the temperature not only of the tyre 7, advantageously in a range comprised for example between 50 and 130 degrees Celsius, but also of the rim 3, for example to a temperature comprised between 50 and 100 degrees Celsius.

In accordance with a preferred embodiment of the present invention, the tyre warmer 1 also comprises at least one stiffening elongated element 16, which is mechanically associated with a corresponding lateral edge 12A, 12B of the internal band 14 of the elongated body 10. When the latter is in closed position B, the stiffening elongated element 16 mechanically forces the internal band 14 to assume the internally folded position (indicated with C in figure 4) towards the opposite lateral edge 12B, 12A, so as to constrain such internal band 14 to adhere to the corresponding annular portion 15 of the internal surface 5 of the rim 3.

The stiffening elongated element 16 is advantageously sized with length substantially equal to the circumference assumed on the internal surface 5 of the rim 3 (figure 3). In such position, it constrains the relative internal band 14 to remain in adherence on the corresponding annular portion 15 of the internal surface 5 of the rim 3. Indeed, if the annular portion 15 is shifted towards the exterior of the wheel 2, i.e. towards the unstable position indicated with dashed line with D in figure 4, the circumference that the ring of the stiffening elongated element 16 would assume would have lower radius and would constrain the stiffening element 16 to assume folds for remaining in such external position; folds that the stiffening elongated element 16, given its rigidity, is elastically opposed to assuming, such that it pushes the internal band 14 into internal position C and hence remains in adherence on the corresponding annular portion 15 of the internal surface 5 of the rim 3.

Of course, the internal band 14 can also assume an external position, indicated with E in figure 4, which is opposite the position C, is more external than the unstable position indicated with D and does not correspond to a useful position for warming the wheel 2. The operator, with his hands, can easily move the internal band 14 from such external position E to the internal position C.

As explained above, in the preferred case of tyre warmer 1 provided with two internal bands 14, each defined beginning from a corresponding lateral edge 12A, 12B, two elongated stiffening elements 16 will be provided in order cover two corresponding annular portions 15 of the internal surface 5 of the rim 3. Each stiffening element 16 is mechanically associated with the corresponding lateral edge 12A, 12B of a corresponding internal band 14.

Each stiffening element 16 is mechanically engaged with the elongated body 10 at a corresponding lateral edge 12A, 12B, such that longitudinal movements are substantially prevented along the extension of the same elongated body 10.

Each stiffening element 16, unable to slide along the elongated body 10, given that it is substantially axially non-compressible, and having rigidity adapted to offer an elastic resistance with respect to transverse bending stress, is aimed to oppose the assumption of the unstable position indicated with D in figure 4 and to force the internal band 14 towards the two stable positions indicated with C and E in the same figure 4. Of course, the operator will push the internal band 14 only towards the internally folded position C in order to allow the warming of the rim 3.

In accordance with a preferred embodiment of the present invention, the flexible elongated body 10 is provided with a pocket 17 and, in the case of two internal bands 14 with respective stiffening elements 16 associated therewith, with two pockets 17 in which the stiffening element or elements 16 are housed. Such pockets 17 are advantageously arranged at the lateral edges 12A, 12B in order to stretch the two internal bands 14 extended on the internal surface 5 of the rim 3.

The pockets 17 are preferably provided with an opening 18 for the insertion of the stiffening elements 16 and are substantially sized for containing, longitudinally to size, such stiffening elements 16 so as to allow them to hit against the ends of the pockets 17, if the two internal bands 14 are moved towards the exterior of the wheel 2 i.e. of the wound elongated body 10.

With the above-reported expression relative to impeding longitudinal movements of the stiffening element 16 along the extension of the elongated body 10, it must be considered that such stiffening element 16 offers resistance against the movement of the internal band 14 towards the external position D away from the rim.

More clearly, the stiffening element 16 can have a certain clearance, in particular within the pocket 17, as it can have a slide margin, also longitudinal, in particular for facilitating the insertion thereof; but such element 16 will have to oppose (elastically resisting the formation of folds or running with respect to the elongated body 10) the movement of the internal band 14.

Advantageously, the stiffening elongated element 16 can be obtained with a rod of suitable diameter or a sheet of suitable width and thickness, elastically flexible, in particular made of plastic, metal or composite (e.g. carbon, glass fibre, Kevlar, etc.). The stiffening elongated element 16 may also only be extended for one section of the elongated body 10 (in such case, multiple sections of elements 16 can be provided in succession), in any case being able to transport therewith, in adherence on the annular portion 15 of the internal surface 5 of the rim 3, also the part of internal band 14 lacking such stiffening elongated element 16.

In addition, the stiffening elongated element 16 can be extended width-wise for the entire width of the internal band 14 (advantageously assuming in such case a flattened sheet form), otherwise it can be extended width-wise only for a brief portion of the internal band 14, in such case advantageously beginning from the lateral edge 12A, 12B in order to stretch the internal band 14 on the annular portion 15 of the internal surface 5 of the rim 3.

The flexible elongated body 10 of the tyre warmer 1 can be obtained in a manner that is well-known to the man skilled in the art of the field, and for this reason not described in detail herein; for example, it will comprise a flexible support structure 10', in particular made of fabric, and flexible electric resistor means 10", constituting one or more electric circuits, mechanically associated with the flexible support structure 10' and powered by an electric power source in order to warm the tyre.

Advantageously, the flexible resistor means 10" are also extended at the internal band 14, or at the internal bands 14 if two internal bands 14 are provided, one for each side, in order to warm the rim 3 of the wheel 2.

It has been surprisingly observed that the warming of the rim 3 - which occurs in a particularly efficient manner due to the adherence of the internal bands 14 on the annular portions 15 of the internal surface 5 of the same rim 3 - also allows bringing the same rim 3 to controlled temperature through the tyre warmer 1, accumulating in the rim 3 mass a considerable quantity of heat capable of efficiently opposing the fall of temperature and pressure on the tyres, once the tyre warmers 1 have been removed from the wheels 2 and once travel on the racetrack has recommenced.

Preferably, the flexible resistor means 10" are connected to electric power supply means that can be driven by a control device, connected with one or more temperature sensors associable with the tyre warmer or with the tread of the tyre or with the rim. A device can be advantageously present for adjusting the pressure of the gas contained in the tyre 7 or conveniently in the rim 3, by making use of a device for detecting the pressure of the tyre inflation gas.

The finding thus conceived is susceptible of numerous modifications and variants, all within the scope of the inventive concept; in addition, all the details can be substituted with other technically equivalent elements. In practice, the materials used, as well as the contingent sizes and shapes, can be of any type in accordance with the requirements and the state of the art. If the characteristics and techniques mentioned in any claim are followed by reference marks, such signs were only added for the sole purpose of increasing the comprehension of the claims - and consequently such reference signs do not have any limiting effect on the interpretation of each element identified by way of example by such reference signs.

## Claims

1. Tyre warmer for motorbike or car wheels, in particular for motorbike or car racing competitions, of the type susceptible of covering a wheel provided with:
- a rim (3) provided with two lateral surfaces (4) having the function of covering, in axial direction, the circumferential edges of the tyre (7), and with an internal surface (5) substantially aimed towards the axis (Z) of the wheel (2) and placed to connect between said lateral surfaces (4);
- and a tyre (7) mounted on said rim (3);
said tyre warmer (1) comprising:
- a flexible elongated body (10), which is susceptible to assume a closed conformation (B) ring-wrapped around the tyre (7) of said wheel (2) and is extended between two end edges (11A, 11B) in a longitudinal main extension direction (Y), and between two lateral edges (12A, 12B) in a transverse direction (X) substantially orthogonal to the longitudinal direction (Y) and defining the width of the tyre warmer;
**characterized in that** said flexible elongated body (10) comprises at least one internal band (14), which is defined beginning from a corresponding said lateral edge (12A, 12B) and, with said elongated body in closed form (B) with the end edges (11A, 11B) coupled together, can be oriented in an internally folded position (C) for covering at least one corresponding annular portion (15) of the internal surface (5) of said rim (3).

2. Tyre warmer for motorbike or car wheels according to claim 1, **characterized in that** it further comprises at least one stiffening elongated element (16), which is mechanically associated with the lateral edge (12A, 12B) of said at least one internal band (14) of said flexible elongated body (10), and mechanically forces - with said flexible elongated body (10) in a closed position (B) - said at least one internal band (14) into said internally folded position (C) towards the opposite lateral edge (12A, 12B) in order to make it adhere on said at least one corresponding annular portion (15) of the internal surface (5) of said rim (3).

3. Tyre warmer for motorbike or car wheels according to claim 1 or 2, **characterized in that** said flexible elongated body (10) comprises:
two internal bands (14), each defined beginning from a corresponding said lateral edge (12A, 12B) in order to cover two corresponding annular portions (15) of the internal surface (5) of said rim (3).

4. Tyre warmer for motorbike or car wheels according to claim 3, **characterized in that** said two internal bands (14) have different width.

5. Tyre warmer for motorbike or car wheels according to claim 3 or 4, **characterized in that** it comprises at least two stiffening elongated elements (16), each mechanically associated with the corresponding lateral edge (12A, 12B) of a corresponding said internal band (14).

6. Tyre warmer for motorbike or car wheels according to claim 2, **characterized in that** said flexible elongated body (10) comprises a central portion (10A) susceptible to cover the tread (7') of the tyre (7), two lateral portions (10B) adjacent to the central one (10A), susceptible to cover two shoulders (7") of the tyre (7) and said at least one internal band (14), which is extended contiguously from a corresponding said lateral portion (10B) and is intended to cover the corresponding annular portion (15) of the internal surface (5) of said rim (3); the length of said stiffening element (16) corresponding substantially to the circumference assumed with the internal band (14) positioned in said internally folded position (C) and being greater than the circumference assumed by the stiffening element (16) with the internal band (14) moved externally (D) away from the opposite lateral edge (12A, 12B).

7. Tyre warmer for motorbike or car wheels according to claim 2, **characterized in that** said at least one stiffening element (16) is mechanically engaged with said flexible elongated body (10) at said corresponding lateral edge (12A, 12B) with respect to longitudinal movements along the main extension direction (Y) of said flexible elongated body (10).

8. Tyre warmer for motorbike or car wheels according to claim 2, **characterized in that** said at least one stiffening element (16) offers an elastic resistance with respect to transverse bending stress.

9. Tyre warmer for motorbike or car wheels according to claim 2, **characterized in that** said at least one stiffening element (16) is essentially non-compressible in the axial direction.

10. Tyre warmer for motorbike or car wheels according to claim 2, **characterized in that** it comprises at least one pocket (17) arranged at said one lateral edge (12A, 12B), within which at least one corresponding said stiffening element (16) can be housed.

11. Tyre warmer for motorbike or car wheels according to claim 10, **characterized in that** said pocket is provided with at least one opening (18) for the insertion of said stiffening elongated element (16), and has longitudinal length substantially equal to the circumference assumed by the stiffening element with the internal band (14) positioned in said internally folded position (C).

12. Tyre warmer for motorbike or car wheels according to any one of the preceding claims, **characterized in that** said at least one stiffening elongated element (16) is an elastically flexible sheet or rod, in particular made of plastic, metal or composite material.

13. Tyre warmer for motorbike or car wheels according to any one of the preceding claims, **characterized in that** said flexible elongated body (10) comprises:
- a flexible support structure (10'), specifically made of fabric;
- flexible resistor means (10") mechanically associated with said flexible support structure (10'), constituting one or more electric circuits powered by an electric power source in order to warm the tyre (7) of said wheel (2); said flexible resistor means (10") being extended at at least one said internal band (14) in order to warm the rim (3) of said wheel (2).

## Patentansprüche

1. Reifenwärmer für Motorrad- oder Autoreifen, insbesondere für Motorrad- oder Autorennen, des Typs, der geeignet ist, ein Rad abzudecken, der Folgendes umfasst:
- einen mit zwei Seitenflächen (4) mit der Funktion des Abdeckens der umlaufenden Kanten des Reifens (7) und mit einer im Wesentlichen zur Achse (Z) des Rades (2) gerichteten und als Verbindung zwischen den genannten Seitenflächen (4) positionierten Innenfläche (5) ausgestatteten Rand (3);
- und einen auf dem genannten Rand (3) montierten Reifen (7); wobei der genannte Reifenwärmer (1) Folgendes umfasst:
- einen flexiblen länglichen Körper (10), der geeignet ist, eine geschlossene Konfiguration (B) anzunehmen, bei der er den Reifen (7) des genannten Rads (2) wie ein Ring umschließt und sich zwischen zwei Endrändern (11A, 11B) in einer vorherrschenden Längsverlaufsrichtung (Y) und zwischen zwei Seitenrändern (12A, 12B) in einer Querrichtung (X) im Wesentlichen rechtwinklig zu der Längsrichtung (Y) erstreckt und die Breite des Reifenwärmers definiert; **dadurch gekennzeichnet, dass** der genannte flexible längliche Körper (10) mindestens ein inneres Band (14) umfasst, das ausgehend von einem entsprechenden Seitenrand (12A, 12B) definiert wird und mit dem genannten länglichen Körper in geschlossener Form (B) bei verbundenen Endrändern (11A, 11B) in einer innen zusammengefalteten Position (C) ausgerichtet werden kann, um wenigstens einen entsprechenden ringförmigen Abschnitt (15) der Innenfläche (5) des genannten Rands (3) abzudecken.

2. Reifenwärmer für Motorrad- oder Autoräder nach Anspruch 1, **dadurch gekennzeichnet, dass** er weiterhin wenigstens ein längliches Versteifungselement (16) umfasst, das mechanisch mit dem Seitenrand (12A, 12B) des genannten wenigstens einen inneren Bands (14) des genannten flexiblen länglichen Körpers (10) verbunden ist und - bei genanntem flexiblen länglichen Körper (10) in einer geschlossenen Position (B) - das genannte wenigstens eine innere Band (14) mechanisch in die genannte innen zusammengefaltete Position (C) in Richtung des gegenüberliegenden Seitenrands (12A, 12B) bringt, um es an dem genannten mindestens einen ringförmigen Abschnitt (15) der Innenfläche (5) des genannten Rands (3) anliegen zu lassen.

3. Reifenwärmer für Motorrad- oder Autoräder nach Anspruch 1 oder 2, **dadurch gekennzeichnet, dass** der genannte flexible längliche Körper (10) Folgendes umfasst:
zwei innere Bänder (14), jedes ausgehend von einem entsprechenden genannten Seitenrand (12A, 12B) definiert, um zwei entsprechende ringförmige Abschnitte (15) der Innenfläche (5) des genannten Rands (3) abzudecken.

4. Reifenwärmer für Motorrad- oder Autoräder nach Anspruch 3, **dadurch gekennzeichnet, dass** die genannten beiden inneren Bänder (14) eine unterschiedliche Breite aufweisen.

5. Reifenwärmer für Motorrad- oder Autoräder nach Anspruch 3 oder 4, **dadurch gekennzeichnet, dass** dieser mindestens zwei längliche Versteifungselemente (16) umfasst, von denen jedes mechanisch mit dem entsprechenden Seitenrand (12A, 12B) eines entsprechenden inneren Bands (14) verbunden ist.

6. Reifenwärmer für Motorrad- oder Autoräder nach Anspruch 2, **dadurch gekennzeichnet, dass** der genannte flexible längliche Körper (10) einen mittleren Abschnitt (10A), der geeignet ist, die Lauffläche (7') des Reifens (7) abzudecken, zwei an den mittleren (10A) angrenzenden seitliche Abschnitte (10B), die geeignet sind zwei Seitenteile (7") des Reifens (7) und das genannte mindestens eine innere Band (14) abzudecken, das zusammenhängend von einem genannten seitlichen Abschnitt (10B) verläuft und dazu dient, den entsprechenden ringförmigen Abschnitt (15) der Innenfläche (5) des genannten Rands (3) abzudecken, umfasst; wobei die Länge des genannten versteifenden Elements (16) im Wesentlichen dem von dem inneren Band (14) gebildeten Umfang entspricht, das in der genannten im Inneren gefalteten Position (C) angeordnet ist und größer ist als der von dem versteifenden Element (16) gebildete Umfang, wenn das innere Band (14) von außen (D) von dem gegenüberliegenden Seitenrand (12A, 12B) wegbewegt wird.

7. Reifenwärmer für Motorrad- oder Autoräder nach Anspruch 2, **dadurch gekennzeichnet, dass** das genannte mindestens eine Versteifungselement (16) mechanisch an dem genannten flexiblen länglichen Körper (10) an dem genannten entsprechenden seitlichen Rand (12A, 12B) in Bezug auf Längsbewegungen entlang der Hauptverlaufsrichtung (Y) des genannten flexiblen länglichen Körpers (10) befestigt ist.

8. Reifenwärmer für Motorrad- oder Autoräder nach Anspruch 2, **dadurch gekennzeichnet, dass** das genannte mindestens eine Versteifungselement (16) einen elastischem Widerstand in Bezug auf die Biegebeanspruchung in Querrichtung bietet.

9. Reifenwärmer für Motorrad- oder Autoräder nach Anspruch 2, **dadurch gekennzeichnet, dass** das genannte mindestens eine Versteifungselement (16) im Wesentlichen in Axialrichtung nicht komprimierbar ist.

10. Reifenwärmer für Motorrad- oder Autoreifen nach Anspruch 2, **dadurch gekennzeichnet, dass** er mindestens eine an dem genannten seitlichen Rand (12A, 12B) angeordnete Tasche (17) umfasst, in der mindestens ein entsprechendes genanntes Versteifungselement (16) untergebracht werden kann.

11. Reifenwärmer für Motorrad- oder Autoreifen nach Anspruch 10, **dadurch gekennzeichnet, dass** die genannte Tasche mit mindestens einer Öffnung (18) zum Einsetzen des genannten länglichen Versteifungselements (16) ausgestattet ist und eine im Wesentlichen dem Umfang entsprechende Länge in Längsrichtung aufweist, den das Versteifungselement mit dem inneren Band (14) bildet, wenn dieses in der genannten innen gefalteten Position (C) angeordnet ist.

12. Reifenwärmer für Motorrad- oder Autoreifen nach einem beliebigen der vorangegangenen Ansprüche, **dadurch gekennzeichnet, dass** das genannte mindestens eine längliche Versteifungselement (16) aus einer elastisch flexiblem Platte oder Stange besteht, die insbesondere aus Kunststoff, Metall oder Verbundwerkstoff gefertigt ist.

13. Reifenwärmer für Motorrad- oder Autoräder nach einem beliebigen der vorangegangenen Ansprüche, **dadurch gekennzeichnet, dass** der genannte flexible längliche Körper (10) Folgendes umfasst:
- eine flexible Trägerstruktur (10'), die insbesondere aus Gewebe hergestellt ist;
- mechanisch mit der genannten flexiblen Trägerstruktur (10') verbundene flexible Widerstandselemente (10"), die einen oder mehrere Stromkreise bilden, die von einer Stromquelle gespeist werden, um den Reifen (7) des genannten Rads (2) zu erwärmen; wobei das genannte flexible Widerstandselement (10") an mindestens einem genannten inneren Band (14) verläuft, um den Rand (3) des genannten Rads (2) zu erwärmen.

## Revendications

1. Couverture chauffante pour roue de moto ou de voiture, en particulier pour moto ou voiture de course, du type susceptible de couvrir une roue, munie de :
- une jante (3) munie de deux surfaces latérales (4) destinées à couvrir, en direction axiale, les bords de circonférence du pneu (7), et d'une surface interne (5) sensiblement dirigée vers l'axe Z de la roue (2) et placée pour connecter lesdites surfaces latérales (4) ;
- et un pneu (7) monté sur ladite jante (3), ladite couverture chauffante (1) comprenant :
- un corps allongé flexible (10), qui est susceptible de prendre une configuration fermée (B) enveloppée autour du pneu (7) de ladite roue (2), qui s'étend entre deux bords terminaux (11A, 11B) en la direction longitudinale d'extension principale (Y) et entre deux bords latéraux (12A, 12B) en direction transversale (X) sensiblement orthogonale à la direction longitudinale (Y) et définissant la largeur de la couverture chauffante ;
**caractérisée en ce que** ledit corps allongé flexible (10) comprend au moins une bande interne (14), qui a pour origine un desdits bords latéraux (12A, 12B) et qui peut être orientée en une position repliée vers l'intérieur (C) pour couvrir au moins une partie annulaire (15) correspondante de la surface interne (5) de ladite jante (3) lorsque ledit corps allongé est en la configuration fermée (B) avec les bords terminaux (11A, 11B) couplés l'un à l'autre.

2. Couverture chauffante pour roue de moto ou de voiture selon la revendication 1, **caractérisée en ce qu'**elle comprend en outre, au moins un élément allongé de raidissement (16), qui est associé mécaniquement au bord latéral (12A, 12B) de ladite au moins une bande interne (14) dudit corps allongé flexible (10) et force mécaniquement - avec ledit corps allongé flexible (10) en position fermée (B) - ladite au moins une bande interne (14) étant en la position repliée vers l'intérieur (C) vers le bord latéral opposé (12A, 12B) pour qu'il adhère à au moins une partie annulaire (15) correspondante de la surface interne (5) de ladite jante (3).

3. Couverture chauffante pour roue de moto ou de voiture selon la revendication 1 ou 2, **caractérisée en ce que** ledit corps allongé flexible (10) comprend :
deux bandes internes (14), chacune ayant pour origine un desdits bords latéraux (12A, 12B) afin de couvrir deux parties annulaires (15) correspondantes de la surface interne (5) de ladite jante (3).

4. Couverture chauffante pour roue de moto ou de voiture selon la revendication 3, **caractérisée en ce que** lesdites deux bandes internes (14) ont des largeurs différentes.

5. Couverture chauffante pour roue de moto ou de voiture selon la revendication 3 ou 4, **caractérisée en ce qu'**elle comprend au moins deux éléments allongés de raidissement (16), chacun étant associé mécaniquement au bord latéral (12A, 12B) correspondant d'une bande interne (14) correspondante.

6. Couverture chauffante pour roue de moto ou de voiture selon la revendication 2, **caractérisée en ce que** ledit corps allongé flexible (10) comprend une partie centrale (10A) destinée à couvrir la bande de roulement (7') du pneu (7), deux parties latérales (10B) adjacentes à la partie centrale (10A), destinée à couvrir deux flancs (7") du pneu (7) et ladite au moins une bande interne (14), qui s'étend de manière contigüe à une partie latérale (10B) correspondante et qui est destinée à couvrir la partie annulaire (15) correspondante de la surface interne (5) de ladite jante (3) ; la longueur de l'élément de raidissement (16) correspondant sensiblement à la circonférence présentée par la bande interne (14) positionnée en ladite position repliée (C) et étant supérieure à la circonférence présentée par l'élément de raidissement (16) lorsque la bande interne (14) est placée de manière externe (D) distante du bord latéral opposé (12A, 12B).

7. Couverture chauffante pour roue de moto ou de voiture selon la revendication 2, **caractérisée en ce que** ledit au moins un élément de raidissement (16) est engagé mécaniquement avec ledit corps allongé flexible (10) au niveau du bord latéral correspondant (12A, 12B) par rapport aux mouvements longitudinaux le long de la direction d'extension principale (Y) dudit corps allongé flexible (10).

8. Couverture chauffante pour roue de moto ou de voiture selon la revendication 2, **caractérisée en ce que** le au moins un élément de raidissement (16) offre une résistance élastique par rapport à la contrainte de flexion transversale.

9. Couverture chauffante pour roue de moto ou de voiture selon la revendication 2, **caractérisée en ce que** le au moins un élément de raidissement (16) est essentiellement non compressible en direction axiale.

10. Couverture chauffante pour roue de moto ou de voiture selon la revendication 2, **caractérisée en ce qu'**elle comprend au moins une poche (17) disposée sur un bord latéral (12A, 12B), dans laquelle au moins un élément de raidissement (16) correspondant peut être logé.

11. Couverture chauffante pour roue de moto ou de voiture selon la revendication 10, **caractérisée en ce que** ladite poche présente au moins une ouverture (18) pour l'insertion dudit élément allongé de raidissement (16), et dont la longueur longitudinale est sensiblement égale à la circonférence présentée par l'élément de raidissement lorsque la bande interne (14) est positionnée en ladite configuration repliée vers l'intérieur (C).

12. Couverture chauffante pour roue de moto ou de voiture selon l'une quelconque des revendications précédentes, **caractérisée en ce que** ledit au moins un élément allongé de raidissement (16) est une feuille ou un barreau flexible de manière élastique, constitué en particulier d'une matière plastique, d'un métal ou d'un matériau composite.

13. Couverture chauffante pour roue de moto ou de voiture selon l'une quelconque des revendications précédentes, **caractérisée en ce que** ledit corps allongé flexible (10) comprend :
- une structure de support flexible (10'), spécifiquement constituée d'un tissu ;
- des moyens de résistance flexibles (10") associés mécaniquement à ladite structure de support flexible (10'), constituant un ou plusieurs circuits électriques alimentés par une source électrique afin de chauffer le pneu (7) de ladite roue (2); lesdits moyens de résistance flexibles (10") se prolongeant jusqu'à au moins une desdites bandes internes (14) pour chauffer la jante (3) de ladite roue (2).
